# FASCICULE DE BREVET EUROPEEN

(11) **EP 2 702 489 B1**
(45) Date de publication et mention de la délivrance du brevet: **18.03.2020**
(21) Numéro de dépôt: 12722424.4
(22) Date de dépôt: 17.04.2012
(51) Int. Cl.: G06F 11/32

(54) **DISPOSITIF DE REPERAGE POUR REPERER UNE ARMOIRE INFORMATIQUE PARMI UNE PLURALITE D'ARMOIRES INFORMATIQUES**
LOKALISIERUNGSVORRICHTUNG ZUR LOKALISIERUNG EINES COMPUTERSCHANKS AUS MEHREREN COMPUTERSCHRÄNKEN
LOCATING DEVICE FOR LOCATING A COMPUTER CABINET FROM AMONG A PLURALITY OF COMPUTER CABINETS

(30) Priorité: 26.04.2011 FR 1153571
(43) Date de publication de la demande: 05.03.2014
(73) Titulaire: Bull SAS, 78340 Les Clayes-sous-Bois (FR)
(72) Inventeur: COUVEE, Philippe, F-38190 Villard Bonnot (FR); GERPHAGNON, Jean-Olivier, F-38180 Seyssins (FR); MEGY, Virginie, F-38640 Claix (FR)
(74) Mandataire: Santarelli
(86) Numéro de dépôt international: PCT/FR2012/050836
(87) Numéro de publication internationale: WO 2012/146857

(56) Documents cités:
- EP-A2- 2 128 766
- WO-A2-03/075117
- WO-A2-2005/071525
- US-A1- 2003 046 339
- US-A1- 2006 190 768
- US-A1- 2010 079 302

## Description

La présente invention concerne la maintenance de systèmes, notamment de systèmes comprenant des armoires informatiques aptes à recevoir des équipements, plus particulièrement un dispositif de repérage pour repérer une armoire informatique parmi une pluralité d'armoires informatiques. Ces armoires informatiques sont couramment désignées par leur appellation anglaise « racks ». Elles sont utilisées dans des centres de traitement de données couramment désignés par leur appellation anglaise « datacenters ».

Les centres de traitement de données rassemblent typiquement des centaines, parfois même des milliers, d'équipements. En cas de panne, ou de tout autre événement nécessitant une intervention physique sur un équipement, il est nécessaire d'identifier et de repérer l'équipement parmi le grand nombre d'autres équipements. Cette tâche est rendue difficile par le fait que certains équipements ont souvent la même apparence et ne se distinguent les uns des autres que par des caractéristiques discrètes telles que des numéros d'identification.

La solution consistant à parcourir un à un les équipements jusqu'à trouver l'équipement sur lequel intervenir est longue et fastidieuse.

Un étiquetage des équipements avec des numéros plus lisibles peut rendre la tâche plus rapide mais elle reste fastidieuse.

Une numérotation contigüe des équipements peut permettre de gagner du temps. Cette solution consiste à numéroter (par exemple dans l'ordre croissant) les équipements disposés selon un chemin prédéterminé (par exemple de haut en bas au sein d'une armoire informatique et de droite à gauche dans une allée comportant plusieurs armoires informatiques). Ainsi, en connaissant le nombre d'équipements rangés dans chaque armoire informatique, il est possible de déduire dans quelle armoire informatique un équipement portant un numéro donné se trouve.

Toutefois, cette solution n'est pas flexible et implique de revoir toute la numérotation en cas de remplacement d'un équipement par plusieurs autres équipements et inversement (remplacer plusieurs équipements par un seul).

Une autre solution consiste à utiliser des données préexistantes et propres à chaque équipement pour l'identifier, par exemple une adresse de type MAC (sigle de « Media Access Control » en terminologie anglo-saxonne), et lui associer des coordonnées dans un repère définissant une position dans le centre de traitement de données (X représentant par exemple un numéro de rangée, Y représentant par exemple un numéro de l'armoire informatique et Z représentant par exemple une position dans l'armoire informatique).

Toutefois, cette solution est relativement complexe à mettre en œuvre car elle nécessite de tenir à jour une base de données cohérente concernant les informations préexistantes propres aux équipements et les données de coordonnées. Ainsi, selon l'exemple précité, il est nécessaire de connaître toutes les adresses MAC de tous les équipements et de les associer à des coordonnées. En cas d'ajout ou de suppression d'équipement, il est nécessaire de revoir tout le système de coordonnées, comme dans la solution évoquée précédemment. En outre, elle nécessite la consolidation de la base de données pour identifier l'emplacement d'un équipement.

Le document WO2005071525 A2 définit un système permettant d'afficher des informations relatives à des équipements d'un boîtier et une pluralité de branches de serveur couplées chacune à ce boîtier. Le document US2010079302 A1 décrit un système informatique gérant des états de plusieurs indicateurs de condition en tant que données d'état logique, chaque indicateur correspondant à une condition respective différente et ayant au moins un état actif ou inactif.

Il existe donc un besoin pour localiser plus simplement et plus rapidement un équipement dans un centre de traitement de données dans lequel des équipements sont disposés dans des armoires informatiques.

L'invention est définie dans les revendications indépendantes. Les revendications dépendantes définissent des modes de réalisation de l'invention.

D'autres caractéristiques et d'autres avantages de la présente invention apparaîtront à la lecture de la description non-limitative suivante, faite en référence aux figures suivantes parmi lesquelles :
- la figure 1 est une illustration d'une rangée d'armoires informatiques selon un mode de réalisation ;
- les figures 2a et 2b illustrent des dispositifs pour repérer une armoire informatique selon des modes de réalisation ;
- les figures 3 à 5 illustrent des armoires informatiques sur lesquelles sont disposées des dispositifs selon des modes de réalisation ; et
- les figures 6 et 7 illustrent des armoires informatiques selon des modes de réalisation.

Comme décrit dans la suite de la description, les modes de réalisation de l'invention offrent un moyen de repérage efficace et simple à mettre en œuvre, notamment pour des armoires informatiques déjà existantes, pour repérer une armoire informatique parmi une pluralité d'armoires informatiques, par exemple une armoire informatique sur laquelle un opérateur doit intervenir.

Un contexte général de mise en œuvre de modes de réalisation de l'invention est tout d'abord présenté.

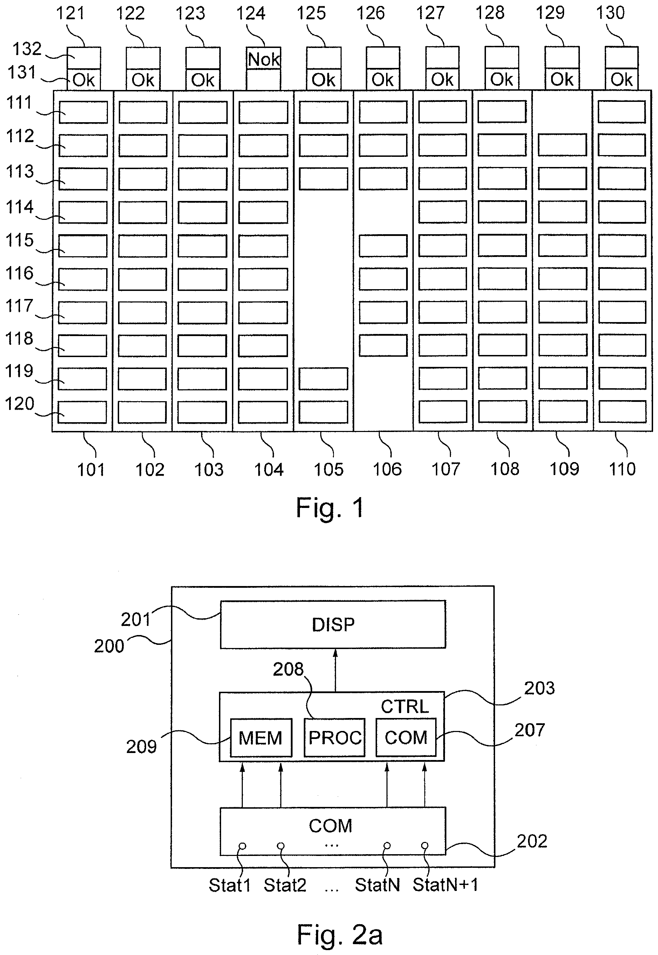

La figure 1 illustre un exemple d'une rangée d'armoires informatiques dans un centre de traitement de données comprenant des équipements informatiques.

Cette rangée comporte ici dix armoires informatiques 101 à 110. Elle pourrait bien entendu en comporter un autre nombre. Chaque armoire informatique est apte à recevoir une pluralité d'équipements informatiques (non représentés), par exemple des calculateurs, des serveurs de données ou autre. A cet effet, chaque armoire informatique comporte des logements 111 à 120, chacun apte à recevoir un équipement informatique. Les armoires informatiques comportent chacune un nombre de logements qui peut être différent d'une armoire informatique à une autre. A titre d'illustration, les armoires informatiques 101, 102, 103, 104, 107, 108 et 110 comportent dix logements, l'armoire informatique 105 en comporte cinq, l'armoire informatique 106 en comporte sept et l'armoire informatique 109 en comporte neuf.

Dans cet exemple, la rangée comporte donc près d'une centaine d'équipements. Selon l'invention, il est offert au technicien chargé d'intervenir sur un équipement du centre de traitement de données, un moyen d'identifier une armoire informatique comportant un équipement sur lequel il doit intervenir, sans parcourir la centaine d'équipements.

A ces fins, un dispositif pour repérer une armoire informatique (ci-après « le dispositif de repérage») est associé à chaque armoire informatique pour en permettre le repérage.

Les dispositifs de repérage représentés sur la figure 1 comportent des unités d'affichage respectives 121 à 130.

Chaque unité d'affichage comporte par exemple deux panneaux lumineux 131 et 132. Le panneau lumineux 131 est par exemple de couleur verte et/ou peut afficher le message « Ok » signifiant que tous les équipements se trouvant dans l'armoire informatique sont dans un état normal. Le panneau lumineux 132 est par exemple de couleur rouge et/ou peut afficher le message « Nok » signifiant qu'au moins un équipement dans l'armoire informatique n'est pas dans un état normal. Les panneaux 131 et 132 sont activés selon l'état de l'armoire informatique en fonction de chaque équipement.

Les panneaux lumineux sont par exemple positionnés sur le dessus des armoires informatiques pour offrir une bonne visibilité.

Dans l'exemple représenté sur la figure 1, toutes les armoires informatiques affichent le message « Ok » sauf l'armoire informatique 104 dont l'unité d'affichage affiche le message « Nok ». Le technicien qui se présente dans l'allée peut donc identifier directement l'armoire informatique 104 qui comporte un équipement particulier, typiquement un équipement défaillant.

Selon l'invention, l'unité d'affichage permet d'identifier une armoire informatique comportant un équipement, notamment un équipement défectueux.

Les unités d'affichage permettent donc à un technicien d'intervenir rapidement sur un équipement défectueux.

Dans la suite, deux modes de réalisation sont présentés. La présentation successive de ces modes de réalisation n'exclut pas la combinaison d'une ou plusieurs caractéristiques présentées pour un mode de réalisation donné avec une ou plusieurs caractéristiques présentées pour un autre mode de réalisation.

Le premier mode de réalisation vise un dispositif de repérage distinct de l'armoire informatique et qui peut être posé ou fixé sur l'armoire informatique et relié à des éléments de celle-ci. Le deuxième mode de réalisation quant à lui vise un dispositif de repérage intégré à une armoire informatique.

La figure 2a représente un dispositif de repérage 200 selon un premier mode de réalisation de l'invention.

La structure d'un tel dispositif de repérage est tout d'abord décrite avant de présenter des modalités de détermination de l'état de l'armoire informatique.

Le dispositif de repérage 200 est prévu pour être connecté à une armoire informatique existante, de façon rapportée, afin de la repérer en cas d'anomalie relative à l'un ou plusieurs équipements logés dans l'armoire informatique. Ce dispositif de repérage est distinct de l'armoire informatique dans cet exemple.

Le dispositif de repérage est typiquement posé sur le dessus d'une armoire informatique.

Le dispositif de repérage 200 comporte une unité d'affichage 201 pour afficher un état des équipements de l'armoire informatique. Plusieurs variantes de réalisation sont décrites dans la suite pour cette unité d'affichage.

Le dispositif de repérage comporte par ailleurs une unité de communication 202 pour échanger des données avec des équipements présents au sein de l'armoire informatique. Par exemple, l'unité de communication comporte un ou plusieurs ports USB (sigle de « Universal Serial Bus » en terminologie anglo-saxonne) pour connecter le dispositif de repérage aux équipements. La connexion peut se faire directement entre l'unité de communication et chaque équipement. Alternativement ou en combinaison, la connexion peut se faire indirectement via une interface de connexion (non représentée), par exemple un « hub », ou encore via un équipement intermédiaire. Dans ce dernier cas, l'unité de communication est connectée à un premier équipement qui est lui-même connecté à un deuxième équipement, le premier équipement se chargeant de transmettre les données relatives à l'état du deuxième équipement au moyen de sa connexion directe avec l'unité de communication et ainsi de suite.

Afin de déterminer l'état général d'une armoire informatique, le dispositif de repérage dispose en outre d'une unité de contrôle 203 configurée pour déterminer l'état de l'armoire informatique en fonction de données reçues via l'unité de communication. L'unité de contrôle est par ailleurs configurée pour commander l'unité d'affichage afin qu'elle affiche l'état de l'armoire informatique.

La détermination de l'état d'une armoire informatique peut se faire selon plusieurs variantes qui ne doivent pas être considérées comme exclusives les unes des autres. Plusieurs des variantes décrites ci-dessous peuvent être mises en œuvre dans un même mode de réalisation.

Selon une première variante, le dispositif de repérage 200 reçoit via son unité de communication des signaux d'état des équipements présents au sein de l'armoire informatique. En d'autres termes, le dispositif de repérage reçoit directement une représentation de l'état des équipements. Par exemple, les équipements peuvent être dans l'un des états « normal », « alerte », « critique », « en maintenance » ou autre, et les équipements émettent des signaux représentant ces états définis selon des paramètres internes de l'équipement comme par exemple la température de processeurs, la fréquence d'horloges ou autre.

La détermination d'un signal d'état est réalisée dans les équipements selon des algorithmes de surveillance ou de diagnostic standard propres à chaque équipement.

L'unité de communication reçoit les signaux et les transmet à l'unité de contrôle. L'unité de contrôle traite ensuite les signaux reçus pour déterminer un état global de l'armoire informatique.

Ainsi, par exemple, dans une même armoire informatique, si tous les équipements sont dans un état « normal », l'unité de contrôle peut déterminer que l'armoire informatique est dans cet état et commande l'unité d'affichage pour afficher une information reflétant cet état (comme décrit dans la suite). Si par contre au moins l'un des équipements est dans un état différent de l'état « normal », l'unité de contrôle peut déterminer un autre état pour l'armoire informatique.

Par exemple, l'unité de contrôle hiérarchise les états des équipements selon un niveau qui leur est associé. Typiquement, l'état « normal » a le niveau le plus faible, l'état « critique » a le niveau le plus élevé et le niveau « alerte » a un niveau intermédiaire. En ce qui concerne l'état « en maintenance » il peut avoir un niveau encore plus élevé que l'état « critique » ou un niveau intermédiaire entre celui des niveaux « alerte » et « critique » selon des choix d'implémentations. D'autres choix sont possibles.

L'unité de contrôle détermine alors l'état de l'armoire informatique comme étant l'état de niveau le plus élevé parmi les états des équipements. Par exemple, si un équipement est dans l'état « alerte », un autre équipement est dans l'état « critique » et les autres équipements sont dans l'état « normal », l'unité de contrôle détermine l'état de l'armoire informatique comme étant « critique » car c'est l'état de plus haut niveau parmi les états des équipements de l'armoire informatique. L'unité de traitement commande ensuite l'unité d'affichage pour afficher une information représentant l'état déterminé, c'est-à-dire ici, l'état « critique ».

L'armoire informatique n'affiche l'état « normal » de nouveau, que lorsque tous les équipements sont dans l'état « normal ».

Pour mettre en œuvre la détermination de l'état de l'armoire informatique par rapport à des signaux d'états provenant des équipements, l'unité de contrôle peut par exemple effectuer une combinaison logique des états des équipements surveillés dans l'armoire informatique.

La détermination de l'état de l'armoire informatique peut être réalisée de manière continue, c'est-à-dire que l'unité de communication reçoit de manière continue les signaux provenant des équipements.

Ainsi, sur réception des signaux d'état provenant des équipements, l'unité de contrôle peut tenir un classement des états selon leur niveau et sélectionner l'état de plus haut niveau.

Alternativement, la réception des signaux représentant les états des équipements peut être réalisée ponctuellement, par exemple à des instants prédéterminés correspondant à des événements identifiés.

Alternativement ou en combinaison, l'unité de communication peut être configurée pour émettre des signaux vers les équipements. Ainsi, l'unité de contrôle peut interroger les équipements pour qu'ils délivrent un signal représentatif de leur état. Par exemple, l'unité de contrôle émet vers les équipements, via l'unité de communication, une requête à cet effet. Alternativement, la requête peut être émise vers une carte électronique de l'armoire informatique (non représentée) qui se charge de récupérer les informations concernant les états des équipements et de les renvoyer vers l'unité de communication du dispositif de repérage.

Selon une deuxième variante décrite en référence à la figue 2b, les équipements n'émettent pas de signaux représentant un état, mais émettent, en réponse à des requêtes, des valeurs de paramètres permettant à l'unité de contrôle d'établir un état d'un équipement. Ces paramètres sont par exemple la température de processeurs, la fréquence d'horloges ou autre.

Ainsi, à la différence de la variante précédemment évoquée, les équipements ne déterminent pas eux même l'état dans lequel ils se trouvent, c'est l'unité de contrôle qui s'en charge.

A titre d'illustration, l'unité de contrôle demande à un équipement de lui fournir la température du ou des processeurs ainsi que leurs fréquences de fonctionnement. Lors de la réception de ces valeurs, l'unité de contrôle compare ces valeurs à des seuils au moyen d'un ou plusieurs comparateurs 205. On peut prévoir un seul comparateur chargé de comparer chaque valeur reçue à un seuil ou plusieurs comparateurs chacun dédié à un paramètre donné ou dédié à un équipement donné. L'état de l'équipement est alors déterminé en réponse aux comparaisons effectuées selon des règles prédéterminées.

Par exemple encore, l'unité de contrôle analyse l'évolution de ces paramètres pour détecter une croissance ou une décroissance trop forte. On peut prévoir d'autres modalités pour déterminer les états des équipements.

Comme dans la première variante, les signaux représentant les états des équipements ou les valeurs de paramètres peuvent êtres reçus de manière continue ou de manière ponctuelle.

Une fois que l'unité de contrôle a déterminé l'état de chaque équipement, elle détermine l'état de l'armoire informatique dans un module de détermination d'état de l'armoire informatique 206 selon les modalités déjà expliquées pour la première variante.

Dans une troisième variante, l'unité de contrôle gère les deux types de signaux, c'est-à-dire ceux représentant directement un état d'un équipement (« normal », « critique », « alerte » ou autre), et des signaux caractérisant des paramètres (température de processeurs, fréquence d'horloges ou autre) reçus sur requête.

Ainsi, pour une même armoire informatique, l'état de certains équipements peut être déterminé selon la première variante alors que l'état d'autres équipements peut être déterminé selon la seconde variante.

Selon cette troisième variante, le dispositif de repérage est donc compatible à la fois avec les équipements capables de déterminer eux même leur état et les équipements qui n'en sont pas capables.

Dans les variantes présentées ci-avant, l'unité de contrôle peut en outre comporter une unité de mémoire 209 avec une quantité de mémoire suffisante pour mettre en œuvre le contrôle de l'unité d'affichage et pour recevoir des signaux d'état ou représentant des paramètres d'état provenant d'équipements. L'unité de mémoire comporte une mémoire dite « vive » (par exemple de type « RAM » sigle de « Random Access Memory » en terminologie anglo-saxonne) pour le traitement des données de calcul, et une mémoire dite « morte » (par exemple de type « ROM » sigle de « Read Only Memory » en terminologie anglo-saxonne) pour le stockage plus durable de données, comme par exemple pour le stockage d'un programme d'ordinateur de gestion de l'unité de contrôle.

Pour mettre en œuvre ce programme d'ordinateur, l'unité de contrôle dispose par exemple d'un processeur 208 configuré pour contrôler l'unité d'affichage et pour gérer les communications avec les équipements informatiques.

L'unité de contrôle peut également disposer de sa propre interface de communication 207 pour communiquer avec l'unité d'affichage 201 et/ou l'unité de communication 202 du dispositif de repérage.

Dans la suite, on décrit des réalisations de l'unité d'affichage qui peuvent être mises en œuvre dans les variantes évoquées ci-avant.

Par exemple, l'unité d'affichage peut indiquer un fonctionnement normal (lorsque l'unité de contrôle a déterminé que l'armoire informatique est dans l'état « normal ») en émettant un signal lumineux vert. Dans ce même exemple, lorsqu'un problème mineur dans un équipement est détecté (lorsque l'unité de contrôle a déterminé que l'armoire informatique est dans l'état « alerte »), il peut être signalé sur l'armoire informatique par un signal lumineux orange. Enfin, lorsque le problème détecté est un problème critique ou majeur (lorsque l'unité de contrôle a déterminé que l'armoire informatique est dans l'état « critique »), il peut être signalé par un signal lumineux rouge.

Les signaux lumineux vert, orange ou rouge peuvent provenir d'un écran LCD (sigle de « Liquid Cristal Display » en terminologie anglo-saxonne), d'une ou plusieurs LED (sigle de « Light Emitting Diode » en terminologie anglo-saxonne), d'un indicateur spécifique du type « feu tricolore », d'une source lumineuse ou autre.

Afin d'afficher l'état de l'armoire informatique, l'unité de contrôle peut par exemple émettre un signal d'activation vers l'indicateur coloré (rouge, vert ou orange) correspondant à l'état sélectionné. Dans d'autres réalisations, l'unité de contrôle émet un signal de commande pour afficher une indication sur un écran.

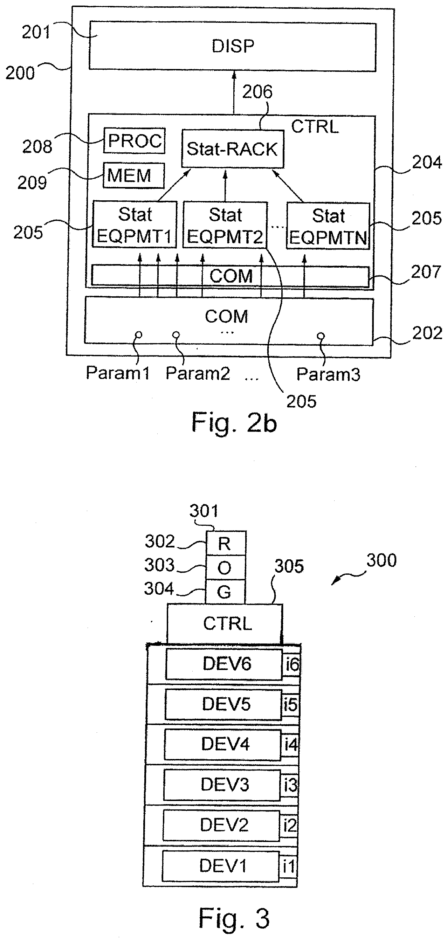

La Figure 3 illustre une armoire informatique 300 sur laquelle est disposé un dispositif de repérage conforme à l'invention comprenant une unité d'affichage 301 et une unité de contrôle 305. L'unité d'affichage 301 comporte trois indicateurs 302, 303 et 304. Les indicateurs 302, 303 et 304 peuvent respectivement émettre un signal rouge, orange et vert.

L'utilisation d'un code couleur peut permettre au technicien d'organiser son intervention sur plusieurs équipements en établissant un ordre de priorité selon le signal lumineux émis par l'unité d'affichage de chaque armoire informatique. Il est observé ici que plusieurs armoires informatiques voisines peuvent utiliser des dispositifs de repérage différents.

Alternativement ou en combinaison, on peut prévoir d'interpréter un état selon la position d'un indicateur. Ainsi, par exemple, les indicateurs 302, 303 et 304 peuvent ne pas être de couleurs différentes mais un technicien peut interpréter l'activation de l'indicateur le plus haut comme un état « critique », l'activation de l'indicateur le plus bas comme l'état « normal » et l'indicateur du milieu comme l'état « alerte ».

L'unité d'affichage est par exemple disposée sur une face extérieure de l'armoire informatique. Ainsi, l'unité d'affichage est visible depuis l'extérieur. Par ailleurs, l'unité d'affichage est par exemple située dans un niveau supérieur, c'est-à-dire une face supérieure de l'armoire informatique, afin de permettre de la rendre visible de loin, par exemple au bout d'une allée (ou rangée). Cela facilite le repérage pour un technicien.

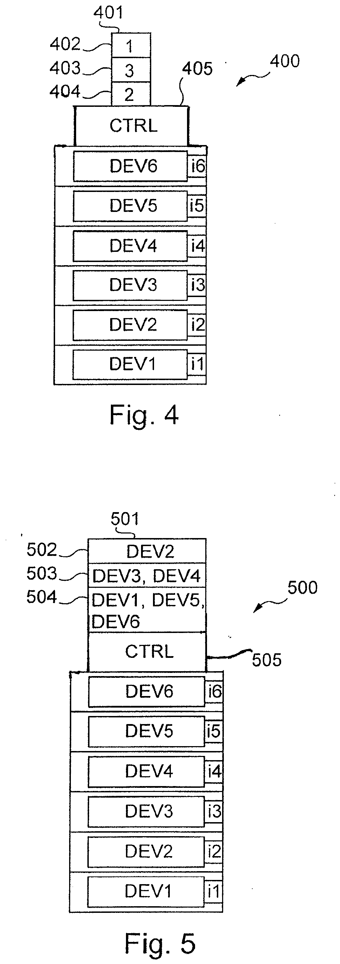

Dans des réalisations de l'unité d'affichage présentées en référence aux figures 4 et 5, il est proposé d'afficher le nombre d'équipements qui se trouvent dans un état donné (figure 4) ou d'afficher des identifiants des équipements dans un état donné (figure 5). On peut aussi prévoir d'afficher les deux informations en même temps (nombre d'équipements et identification de ceux-ci). Dans ces réalisations, on peut utiliser un écran LCD.

Sur l'armoire informatique 400 représentée sur la figure 4, est disposée un dispositif de repérage comprenant une unité d'affichage 401 et une unité de contrôle 405. L'unité d'affichage 401 dispose de trois indicateurs 402, 403 et 404 respectivement rouge, orange et vert comme celle de la figure 3.

Dans l'exemple de la figure 4, il y a deux équipements dans l'état « normal » (vert), trois équipements dans l'état « alerte » (orange) et un équipement dans l'état « critique » (rouge). Ainsi, l'indicateur rouge 402 affiche le chiffre « 1 », l'indicateur orange 403 affiche le chiffre « 3 » et l'indicateur vert 404 affiche le chiffre « 2 ».

Alternativement, ou de façon complémentaire, un dispositif de repérage comprenant une unité d'affichage 501, avec trois indicateurs 502, 503 et 504 rouge, orange et vert pouvant afficher un identifiant des équipements selon leur état peut être utilisé en lien avec une armoire informatique 500 comme illustré sur la figure 5. Dans l'exemple de la figure 5, l'équipement DEV2 est dans l'état « critique » (rouge), les équipements DEV3 et DEV4 sont dans l'état « alerte » (orange), et les équipements DEV1, DEV5 et DEV6 sont dans l'état « normal ». Ainsi, l'indicateur rouge 502 affiche la chaîne de caractères « DEV2 », l'indicateur orange 503 affiche la chaîne de caractères « DEV3, DEV4 » et l'indicateur vert 504 affiche la chaîne de caractères « DEV1, DEV5, DEV6 ». L'unité d'affichage est commandée par une unité de contrôle 505.

Lorsque le dispositif de repérage comporte une unité d'affichage telle que décrite en référence aux figures 4 et 5, l'unité de contrôle peut être configurée pour commander l'affichage du nombre d'équipements ou les identifiants des équipements.

Il peut par ailleurs être prévu que les différents états évoqués ci-dessus (« critique », « normal », « alerte ») soient modifiables par un technicien depuis un équipement de l'armoire informatique, ou par un autre dispositif via une interface dédiée (non représentée).

Par exemple, un technicien peut passer un équipement de son état initial vers un état « en maintenance ». Ainsi, si le technicien à besoin de s'éloigner de l'armoire informatique, il peut revenir directement vers cette armoire informatique sans avoir à la rechercher une nouvelle fois. L'état « en maintenance » peut être indiqué par un indicateur spécifique (d'une autre couleur par exemple) ou en activant tous les indicateurs par exemple.

Les ports de communication utilisés peuvent, par exemple, être des ports USB (sigle de « Universal Serial Bus » en terminologie anglo-saxonne). Ce type de port peut être adapté aux nœuds des centres de traitement de données du type HPC (sigle de « High Performance Computing » en terminologie anglo-saxonne). Il est possible de prévoir d'autres types de ports de communication, ou des combinaisons de ces ports de communication pour permettre la mise en œuvre de l'invention avec une large gamme d'équipements informatiques. Par exemple, les ports de communication du type Série ou Ethernet peuvent être adaptés à des équipements informatiques tels que les commutateurs réseaux (appelés « switch » en terminologie anglo-saxonne) ou des unités de distribution d'alimentation (appelées « PDU » sigle de « Power Distribution Units » en terminologie anglo-saxonne).

Afin de faire repasser un équipement d'un état différent de « normal » vers l'état « normal », un technicien peut définir manuellement l'état d'un équipement directement sur cet équipement, ou via une interface dédiée (non représentée).

Il peut également être possible de définir l'état d'un équipement automatiquement à l'aide d'une fonction locale ou distante, notamment une fonction de diagnostic.

Après avoir présenté un mode de réalisation selon lequel le dispositif de repérage est distinct des armoires informatiques, on présente ci-dessous un mode de réalisation selon lequel le dispositif de repérage est au moins partiellement intégré à une armoire informatique.

Dans la suite, on présente deux variantes qui ne sont pas exclusives l'une de l'autre.

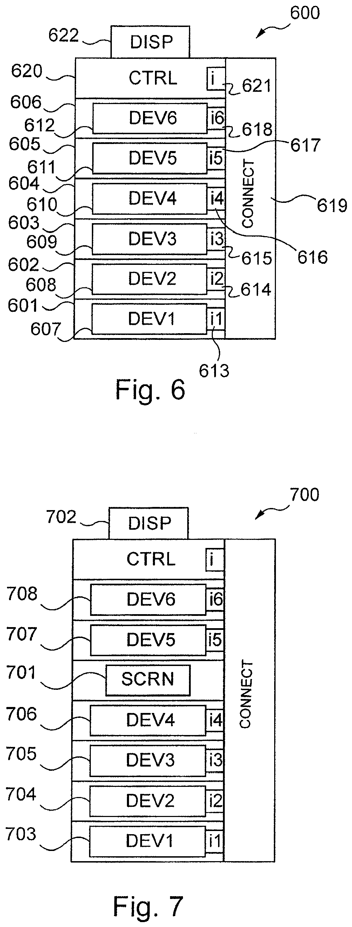

La figure 6 représente une armoire informatique 600 selon le présent mode de réalisation avec six logements 601 à 606 recevant respectivement six équipements informatiques 607 à 612.

Par exemple, les logements 601 à 606 comportent chacun des ports de communication respectifs 613 à 618. Alternativement, ou en combinaison, ces ports de communication appartiennent aux équipements informatiques. Ces ports de communication permettent par exemple de connecter les équipements informatiques 607 à 612 entre eux ou de les connecter à d'autres équipements d'autres armoires informatiques. Ces ports de communication peuvent aussi servir à connecter chaque équipement directement ou indirectement à une unité de contrôle 620 via un port de communication 621 de l'unité de contrôle.

Les différentes connections entre les équipements et l'unité de contrôle sont représentées génériquement par les moyens de connexion 619. Les moyens de connections peuvent par exemple comporter un ensemble de câbles connecteurs ou une interface de communication pré-câblée.

L'unité de contrôle commande une unité d'affichage 622. Cette unité d'affichage peut être du même type que celles évoquées pour le premier mode de réalisation.

En outre, l'unité de contrôle peut fonctionner de la même manière que celle évoquée dans le premier mode de réalisation.

Afin de faciliter la maintenance, on peut aussi prévoir une seconde unité d'affichage à l'intérieur de l'armoire informatique pour dupliquer un affichage actuel du dispositif de repérage associé à l'armoire informatique.

La figure 7 illustre une armoire informatique 700 ayant une telle unité d'affichage intérieure 701. L'armoire informatique comporte une unité d'affichage extérieure 702, et des logements 703, 704, 705, 706, 707 et 708 pour recevoir des équipements informatiques.

L'unité d'affichage intérieure 701 est par exemple disposée à hauteur d'homme afin d'offrir une vue aisée à un technicien sur l'état en cours d'affichage sur l'unité d'affichage extérieure 702. En effet, l'unité d'affichage extérieure 702 étant positionné en hauteur afin d'être visible de loin, il peut être inconfortable pour un technicien de pouvoir visualiser l'affichage actuel alors qu'il est très proche de l'armoire informatique pour intervenir dessus.

L'unité d'affichage intérieure peut être utilisée pour afficher d'autres informations utiles à un technicien pour son intervention. Par exemple, ces informations peuvent le guider dans l'identification d'un équipement défectueux (par exemple son identifiant ou sa position) ou dans l'établissement d'un diagnostic. Par exemple, l'unité d'affichage interne peut afficher des données techniques ou des indications sur l'origine de la panne. Les informations présentées peuvent par exemple correspondre aux paramètres qui ont conduit à l'établissement de l'état de l'armoire informatique (température, fréquence d'horloge ou autre). A titre d'illustration, si l'équipement à été jugé dans un état différent de « normal » du fait d'une élévation de température trop importante, l'unité d'affichage interne peut afficher la température de l'équipement.

Selon une première variante, l'unité de contrôle est intégrée à l'armoire informatique. Elle peut alors constituer un module propre à l'armoire informatique.

Comme dans le premier mode de réalisation, l'unité de contrôle gère des signaux provenant des équipements représentant un état d'équipement et/ou des signaux représentant des paramètres de l'équipement et permettant à l'unité de contrôle de déterminer son état pour en déduire, avec les états des autres équipements, l'état de l'armoire informatique.

Selon une seconde variante, l'unité de contrôle est un équipement inséré dans un logement de l'armoire informatique. Ainsi, l'unité de contrôle est considérée comme un équipement intégré à l'armoire informatique de la même manière que les équipements qui sont surveillés par l'unité de contrôle.

Dans cette seconde variante, l'unité de contrôle peut aussi être distribuée de façon matérielle ou logicielle dans plusieurs équipements. Par exemple, en reprenant les références de la figure 2b, chaque équipement peut comporter un comparateur 205 pour déterminer l'état de l'équipement au sein même de l'équipement. Le module de détermination de l'état de l'armoire informatique 206 peut être disposé dans un équipement dédié ou faire partie de l'armoire informatique en tant que module intégré.

A la lecture de la présente description détaillée, il apparaîtra à la personne du métier d'autres variantes de réalisation. La personne du métier sera par ailleurs à même de configurer une unité de contrôle ou de réaliser un programme d'ordinateur de gestion d'une telle unité de contrôle pour réaliser un dispositif de repérage ou une armoire informatique selon l'invention.

## Revendications

1. Armoire informatique (101) comportant un dispositif de repérage visuel (200), ladite armoire informatique étant configurée pour recevoir une pluralité d'équipements, ledit dispositif de repérage comportant :
- une unité de communication (202) pour recevoir au moins un signal provenant d'au moins un équipement de ladite pluralité d'équipements, ledit au moins un signal représentant une information permettant de déterminer un état dudit au moins un équipement,
- une unité de contrôle (203, 204) configurée pour déterminer un état de l'armoire informatique en fonction d'au moins ledit au moins un signal provenant d'au moins un équipement de ladite pluralité d'équipements, et
- une unité d'affichage (201, 301, 401, 501) pour afficher une représentation de l'état déterminé par l'unité de contrôle, ladite unité d'affichage étant sur une face extérieure supérieure de l'armoire informatique de sorte à dépasser du dessus de l'armoire de manière à être repérable visuellement parmi une pluralité d'armoires informatiques,
dans laquelle les équipements peuvent avoir un état parmi une pluralité d'états possibles, lesdits états possibles étant ordonnés par niveaux, et dans laquelle l'unité d'affichage (201, 301, 401, 501) comporte une pluralité d'indicateurs correspondant respectivement aux niveaux de ladite pluralité d'états possibles, et dans laquelle l'unité de contrôle est configurée pour commander l'unité d'affichage pour que chaque indicateur soit actif si au moins un équipement de ladite pluralité d'équipements est dans l'état correspondant à l'indicateur, et inactif sinon.

2. Armoire informatique (101) selon la revendication 1, dans laquelle le au moins un signal provenant d'au moins un équipement de ladite pluralité d'équipements représente au moins une valeur d'au moins un paramètre physique propre audit au moins un équipement, et dans laquelle l'unité de contrôle (203, 204) est en outre configurée pour déterminer un état dudit au moins un équipement en fonction de ladite au moins une valeur du au moins un paramètre physique.

3. Armoire informatique (101) selon l'une quelconque des revendications 1 et 2, dans laquelle l'unité de contrôle (203, 204) est par ailleurs configurée pour commander l'unité d'affichage (501) pour afficher au moins un identifiant d'un équipement informatique avec une représentation de son état.

4. Armoire informatique (101) selon l'une quelconque des revendications 1 à 3, dans laquelle l'unité d'affichage (201, 301, 401, 501) comporte une source lumineuse apte à émettre un signal lumineux dont une caractéristique est fonction de l'état de l'armoire informatique déterminé par l'unité de contrôle.

5. Armoire informatique (101) selon la revendication 1, dans laquelle au moins un des indicateurs peut afficher au moins un identifiant d'un équipement, et dans laquelle l'unité de contrôle (203, 204) est configurée pour commander l'unité d'affichage pour que ledit au moins un des indicateurs affiche au moins un identifiant d'un équipement dont l'état correspond audit au moins un des indicateurs.

6. Armoire informatique (101) selon la revendication 1, dans laquelle au moins un des indicateurs peut afficher un nombre d'équipements ayant un même état, et dans laquelle l'unité de contrôle (203, 204) est configurée pour commander l'unité d'affichage pour que ledit au moins un des indicateurs affiche un nombre d'équipements dont l'état correspond audit au moins un des indicateurs.

7. Armoire informatique (101) selon l'une quelconque des revendications précédentes, dans laquelle l'unité de contrôle (203, 204) est configurée pour recevoir une commande de modification de l'état d'un équipement.

8. Armoire informatique (101) selon l'une quelconque des revendications précédentes, comprenant au moins un équipement, ledit équipement comprenant l'unité de contrôle du dispositif de repérage.

9. Armoire informatique (101) selon l'une quelconque des revendications 1 à 7, comprenant une pluralité d'équipements, l'unité de contrôle du dispositif de repérage étant distribuée dans des équipements de ladite pluralité d'équipements.

10. Armoire informatique (101) selon l'une quelconque des revendications 1 à 9, comportant en outre une unité d'affichage interne disposée à l'intérieur de l'armoire informatique.

## Patentansprüche

1. Computerschrank (101) mit einer Sichtlokalisierungsvorrichtung (200), wobei der Computerschrank dazu ausgelegt ist, mehrere Betriebsmittel aufzunehmen, wobei die Lokalisierungsvorrichtung umfasst:
- eine Kommunikationseinheit (202), um mindestens ein Signal zu empfangen, das von mindestens einem Betriebsmittel der mehreren Betriebsmittel stammt, wobei das mindestens eine Signal eine Information darstellt, die es erlaubt, einen Zustand des mindestens einen Betriebsmittels zu bestimmen,
- eine Steuereinheit (203, 204), die dazu ausgelegt ist, einen Zustand des Computerschranks in Anhängigkeit von zumindest dem mindestens einen Signal zu bestimmen, das von mindestens einem Betriebsmittel der mehreren Betriebsmittel stammt, und
- eine Anzeigeeinheit (201, 301, 401, 501), um eine Darstellung des durch die Steuereinheit bestimmten Zustands anzuzeigen, wobei sich die Anzeigeeinheit auf einer oberen Außenseite des Computerschranks, von der Oberseite des Schranks vorstehend befindet, um aus einer Mehrzahl von Computerschränken visuell lokalisierbar zu sein,
wobei die Betriebsmittel einen Zustand von mehreren möglichen Zuständen haben können, wobei die möglichen Zustände je nach Niveaus geordnet sind, und wobei die Anzeigeeinheit (201, 301, 401, 501) mehrere Indikatoren umfasst, die jeweils den Niveaus der mehreren möglichen Zustände entsprechen, und wobei die Steuereinheit dazu ausgelegt ist, die Anzeigeeinheit anzusteuern, damit jeder Indikator aktiv ist, wenn sich mindestens ein Betriebsmittel der mehreren Betriebsmittel in dem Zustand befindet, der dem Indikator entspricht, und andernfalls inaktiv ist.

2. Computerschrank (101) nach Anspruch 1, wobei das mindestens eine Signal, das von mindestens einem Betriebsmittel der mehreren Betriebsmittel stammt, mindestens einen Wert mindestens eines physikalischen Parameters darstellt, der dem Betriebsmittel zueigen ist, und wobei die Steuereinheit (203, 204) darüber hinaus dazu ausgelegt ist, einen Zustand des mindestens einen Betriebsmittels in Abhängigkeit von diesem mindestens einen Wert des mindestens einen physikalischen Parameters zu bestimmen.

3. Computerschrank (101) nach einem der Ansprüche 1 und 2, wobei die Steuereinheit (203, 204) im Übrigen dazu ausgelegt ist, die Anzeigeeinheit (501) anzusteuern, mindestens eine Kennung eines Computerbetriebsmittels mit einer Darstellung seines Zustands anzuzeigen.

4. Computerschrank (101) nach einem der Ansprüche 1 bis 3, wobei die Anzeigeeinheit (201, 301, 401, 501) eine Lichtquelle umfasst, die in der Lage ist, ein Lichtsignal abzugeben, von dem eine Eigenschaft von dem durch die Steuereinheit bestimmten Zustand des Computerschranks abhängt.

5. Computerschrank (101) nach Anspruch 1, wobei mindestens einer der Indikatoren mindestens eine Kennung eines Betriebsmittels anzeigen kann, und wobei die Steuereinheit (203, 204) dazu ausgelegt ist, die Anzeigeeinheit anzusteuern, damit der mindestens eine der Indikatoren mindestens eine Kennung eines Betriebsmittels anzeigt, dessen Zustand dem mindestens einen der Indikatoren entspricht.

6. Computerschrank (101) nach Anspruch 1, wobei mindestens einer der Indikatoren eine Anzahl von Betriebsmitteln anzeigen kann, die einen gleichen Zustand haben, und wobei die Steuereinheit (203, 204) dazu ausgelegt ist, die Anzeigeeinheit anzusteuern, damit der mindestens eine der Indikatoren eine Anzahl von Betriebsmitteln anzeigt, deren Zustand dem mindestens einen der Indikatoren entspricht.

7. Computerschrank (101) nach einem der vorhergehenden Ansprüche, wobei die Steuereinheit (203, 204) dazu ausgelegt ist, einen Modifizierungsbefehl für den Zustand eines Betriebsmittels zu empfangen.

8. Computerschrank (101) nach einem der vorhergehenden Ansprüche, mindestens ein Betriebsmittel umfassend, wobei das Betriebsmittel die Steuereinheit der Lokalisierungsvorrichtung umfasst.

9. Computerschrank (101) nach einem der Ansprüche 1 bis 7, mehrere Betriebsmittel umfassend, wobei die Steuereinheit der Lokalisierungsvorrichtung in den Betriebsmitteln der mehreren Betriebsmittel verteilt ist.

10. Computerschrank (101) nach einem der Ansprüche 1 bis 9, darüber hinaus eine interne Anzeigeeinheit umfassend, die im Inneren des Computerschranks angeordnet ist.

## Claims

1. A data center rack (101) comprising a visual indicating device (200), said data center rack being configured to receive a plurality of items of equipment, said indicating device comprising:
- a communication unit (202) to receive at least one signal from at least one item of equipment of said plurality of items of equipment, said at least one signal representing information enabling a state of said at least one item of equipment to be determined,
- a control unit (203, 204) configured to determine a state of the data center rack based on at least said at least one signal from at least one item of equipment of said plurality of items of equipment, and
- a display unit (201, 301, 401, 501) for displaying a representation of the state determined by the control unit, said display unit being on an upper external face of the data center rack so as to protrude from the top of the data center rack so as to be visually identifiable from among a plurality of data center racks,
wherein the items of equipment can have a state among a plurality of possible states, said possible states being ordered by levels, and wherein the display unit (201, 301, 401, 501) comprises a plurality of indicators respectively corresponding to the levels of said plurality of possible states, and wherein the control unit is configured to control the display unit so that each indicator is either active if at least one item of equipment of said plurality of items of equipment is in the state corresponding to the indicator, and inactive otherwise.

2. A data center rack (101) according to claim 1, wherein the at least one signal from at least one item of equipment of said plurality of items of equipment represents at least one value of at least one physical parameter specific to said at least one item of equipment, and wherein the control unit (203, 204) is further configured to determine a state of said at least one item of equipment based on said at least one value of the at least one physical parameter.

3. A data center rack (101) according to any one of claims 1 and 2, wherein the control unit (203, 204) is further configured to control the display unit (501) to display at least one identifier of an item of computer equipment with a representation of its state.

4. A data center rack (101) according to any one of claims 1 to 3, wherein the display unit (201, 301, 401, 501) comprises a light source adapted to emit a light signal of which a characteristic depends on the state of the data center rack determined by the control unit.

5. A data center rack (101) according to claim 1, wherein at least one of the indicators can display at least one identifier of an item of equipment, and wherein the control unit (203, 204) is configured to control the display unit so that said at least one of the indicators displays at least one identifier of an item of equipment of which the state corresponds to said at least one of the indicators.

6. A data center rack (101) according to claim 1, wherein at least one of the indicators can display a number of items of equipment having a same state, and wherein the control unit (203, 204) is configured to control the display unit so that said at least one of the indicators displays a number of items of equipment of which the state corresponds to said at least one of the indicators.

7. A data center rack (101) according to any one of the preceding claims, wherein the control unit (203, 204) is configured to receive a command to modify the state of an item of equipment.

8. A data center rack (101) according to any one of the preceding claims, comprising at least one item of equipment, said item of equipment comprising the control unit of the indicating device.

9. A data center rack (101) according to any one of claims 1 to 7, comprising a plurality of items of equipment, the control unit of the indicating device being distributed in items of equipment of said plurality of items of equipment

10. A data center rack (101) according to any one of claims 1 to 9, further comprising an internal display unit disposed inside the rack.
